# EUROPEAN PATENT APPLICATION

(11) **EP 2 503 144 A1**
(43) Date of publication of application: **26.09.2012**
(21) Application number: 10831713.2
(22) Date of filing: 13.07.2010
(51) Int. Cl.: F03D 5/00, F03D 11/04

(54) **WIND-COLLECTING TOWER FOR A WIND POWER GENERATOR**

(30) Priority: 18.11.2009 KR 20090111688
(71) Applicant: Kim, Juen Soo, Seoul 110-011 (KR)
(72) Inventor: Kim, Juen Soo, Seoul 110-011 (KR)
(74) Representative: O'Neill, Michelle
(86) International application number: PCT/KR2010/004552
(87) International publication number: WO 2011/062346

(57) **Abstract**

The present invention relates to a wind-collecting tower for a wind power generator, comprising a cylindrical wind tunnel which stands upright on a base, and which has a circumferential surface with a plurality of wind inlet ports for introduction of wind; a guide unit having a plurality of guide passages arranged on the circumference of the wind tunnel to guide wind introduced from the outside to the wind inlet ports; a plurality of louvered windows formed on the guide passages of the guide unit and spaced apart from the wind tunnel, such that the wind introduced into the guide unit is guided downwardly by the guide unit and introduced into the wind inlet ports of the wind tunnel; and one or more support frames which are arranged transversely on the respective guide passages, and which have one or more through-holes covered by the louvered windows. The guide unit comprises: a plurality of wind-collecting plates arranged in a radial direction along the circumference of the wind tunnel; and a plurality of guide plates arranged on the circumference of the wind tunnel between the wind-collecting plates and spaced apart from each other in a vertical direction such that the guide plates cooperate with the wind-collecting plates so as to form the guide passages. The entirety of the surface area of the wind tunnel serves to introduce air from the outside, and power-generating efficiency of the wind power which generates electrical energy by means of the wind collected in the wind tunnel is improved.

## Description

### TECHNICAL FIELD

The present invention disclosed herein relates to a wind-collecting tower for a wind power generator, and more particularly, to a wind-collecting tower for a wind power generator which collects wind introduced through a wide surface area downward through an inner wind tunnel to rotate a turbine, thereby more efficiently generating power through the wind power generator.

### BACKGROUND ART

In general, wind power generators for generating power using wind includes a windmill on a rotation shaft thereof to generate power using a rotation force generated by rotating the windmill by wind.

However, in such a wind power generator, a windmill can be rotated to generate power only when wind having a relatively high velocity blows. Thus, the wind power generator may not be installed at areas except for specific areas where a relatively large amount of wind blows. Furthermore, there is a limitation that efficiency for converting wind energy into electrical energy may be very low.

To solve this limitation, this applicant disclosed an apparatus having a new structure in which wind is concentrated using a wind-collecting tower to generate power even though wind having a relatively low velocity blows (Korean Patent Publication No. 10-2009-0021305).

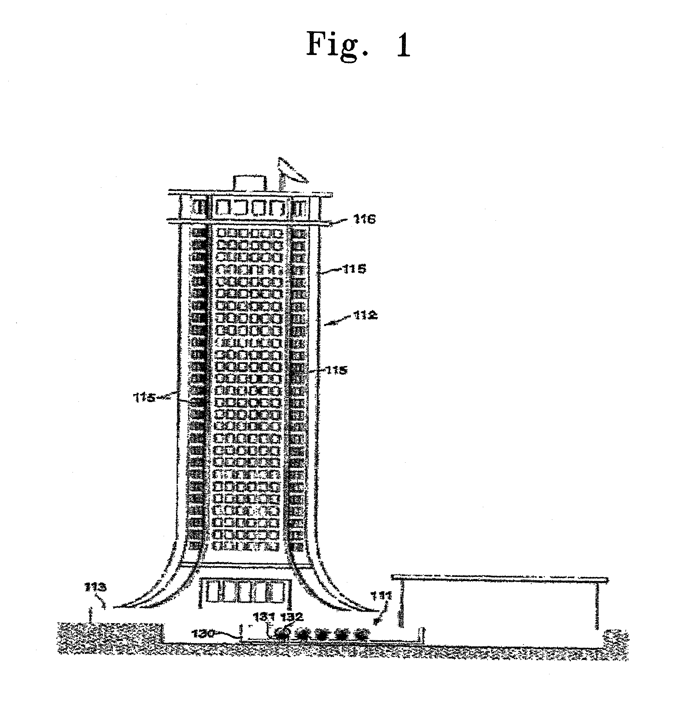

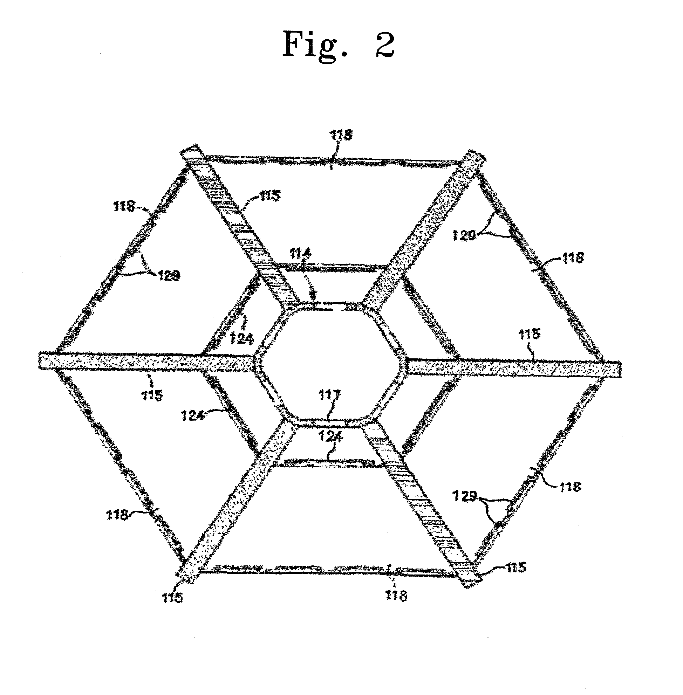

Referring to FIG. 1, a wind power generator includes a generator room 111 installed in the underground and a wind-collecting unit such as a wind-collecting tower 112 installed on the ground. Referring to FIGS. 1 and 2, the wind-collecting tower 112 includes a wind tunnel 114 constituted by a cylindrical member which stands upright on a base 113 and having a circumferential surface in which a plurality of wind inlet ports 117 are defined, a plurality of wind-collecting plates 115 arranged in a normal direction from a circumferential wall of the wind tunnel 114, a top plate 116 for covering upper openings between the wind-collecting plates 115 and an upper opening of the wind tunnel 114, a plurality of guide plates 118 disposed between the wind-collecting plates 115 adjacent to each other to guide wind blowing between the wind-collecting plates 115 toward the wind tunnel 114, and a plurality of opening/closing holes 124 and 129 disposed between the wind-collecting plates 115 adjacent to each other to allow wind to blow from the outsides of the wind-collecting plates 115 into the insides of the wind-collecting plates 115 and prevent wind from blowing from the insides of the wind-collecting plates 115 to the outside.

An underground wind tunnel 130 communicating with the wind tunnel 114 is installed in the generator room 111. In addition, a turbine 131 rotated by wind blowing into the underground wind tunnel 130, a generator 132 operated by the turbine 131, and other power transmission equipments are installed in the generator room 111.

According to the wind power generator having the above-described structure, wind blowing along a circumference of the wind tunnel 114 may be guided into a guide passage defined by the wind-collecting plates 115 and the guide plates 118, and then, the wind may be introduced again into the wind tunnel 114 through the wind inlet ports 117 and supplied into the turbine 131 to rotate the turbine 131 and the generator 132 connected to the turbine 131, thereby generating power.

Thus, since the wind power generator may efficiently collect wind blowing in various directions to concentrate and introduce the wind into the wind tunnel 114, thereby continuously generating power even though wind having a relatively low velocity blows, the wind power generator may be installed at various places and have high power-generating efficiency.

Particularly, the opening/closing holes 124 and 129 are defined between the outer circumferences of the wind-collecting plates 115 to prevent wind introduced into the guide passage from reversely flowing to the outside. Thus, it may prevent the wind power from being reduced to improve power-generating efficiency.

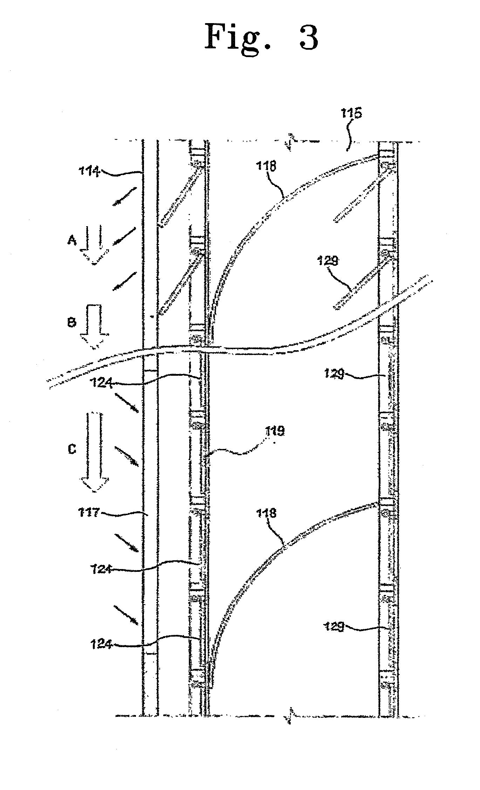

However, as shown in FIG. 3, in the typical wind-collecting tower 112 for the wind power generator, wind flowing into the wind tunnel 114 may be accumulatively increased in intensity around the lower opening/closing holes 124 of the plurality of opening/closing holes 124, i.e., toward a lower end of the wind tunnel 114 as shown by arrows A, B, and C. Thus, since wind accumulated around an upper or middle portion of the wind tunnel 114 has a relatively low intensity as shown by the arrows A and B, the opening/closing hole 124 of an inner barrel 119 adjacent to the wind tunnel 114 is normally opened or closed. However, since wind is gradually increased in intensity toward a lower end of the wind tunnel as shown by the arrow C, the opening/closing holes 124 adjacent to the lower wind inlet ports 117 are closed or not normally opened or closed by an accumulatively increased wind pressure.

Furthermore, since the wind-collecting tower 112 has a high height, wind blowing outside the wind-collecting tower 112 may have a vertical deflection. Particularly, when wind blowing toward the upper opening/closing hole 129 has a relatively high intensity than that of wind blowing toward the lower opening/closing hole 129, a portion of the wind passing through the upper opening/closing hole 129 may significantly reduce an opened degree of the lower opening/closing hole 129 or completely cover the lower opening/closing hole 129. Thus, the wind-collecting tower 112 may not collect wind through the whole outer circumferential surface thereof to significantly reduce the wind-collecting efficiency.

Accordingly, the wind-collecting tower 112 may not collect a large amount of wind blowing toward the lower portion thereof. Thus, since the wind-collecting tower 112 does not fully utilize wind blowing along the outside thereof, an amount of wind introduced into the wind tunnel 114 may be reduced as much. Therefore, the wind power generator using wind collected through the wind tunnel 114 may be reduced in power-generating efficiency.

### DISCLOSURE OF THE INVENTION

### TECHNICAL PROBLEM

The present invention provides a wind power generator in which the introduction of external air is not interrupted by a wind pressure accumulated within a wind tunnel even though the wind pressure within the wind tunnel is gradually increased toward a lower side of the wind tunnel by the external air introduced into the wind tunnel, and the external air is always introduced using the entire surface of the wind tunnel to generate electricity using the wind collected into the wind tunnel, thereby improving power-generating efficiency.

### TECHNICAL SOLUTION

Embodiments of the present invention provide wind-collecting towers for a wind power generator, the wind-collecting towers including: a cylindrical wind tunnel which stands upright on a base, the cylindrical wind tunnel having a circumferential surface in which a plurality of wind inlet ports for introducing wind are defined; a guide part disposed on a circumference of the wind tunnel, the guide part having a plurality of guide passages for guiding wind introduced from the outside into the wind inlet ports; a plurality of louvered windows disposed spaced from the wind tunnel on the guide passages of the guide part to guide the wind introduced into the guide part downward from the guide part, thereby introducing the wind into the wind inlet ports of the wind tunnel; and at least one or more support frame bodies arranged transversely on each of the guide passages, the support fame bodies having one or more through-holes covered by the louvered windows, wherein the guide part includes: a plurality of wind-collecting plates arranged in a redial direction along the circumference of the wind tunnel; and a plurality of guide plates vertically spaced from each other between the wind-collecting plates and arranged on the circumference of the wind tunnel so that the guide plates together with the wind-collecting plates defines the guide passages.

In some embodiments, wind-collecting towers may further include a blowing unit including: a rotation shaft rotatably disposed to pass through a center of a top plate corresponding to the wind tunnel; a plurality of wind roses disposed on an upper portion of the rotation shaft and rotated by wind passing above the top plate to rotate the rotation shaft; and an impeller disposed on a lower portion of the rotation shaft and synchronously rotated with the wind roses to generate an air current flowing from an upper end of the wind tunnel to a lower end.

In other embodiments, wind-collecting towers may further include at least one or more support frame bodies arranged transversely on each of the guide passages, the support fame bodies having one or more through-holes covered by the louvered windows.

In still other embodiments, the louvered windows may include: a window frame defining an outer circumference thereof and coupled to the through-holes; and at least one or more louvered plates attached to the window frame to cover an opening of the window frame, the louvered plates being arranged inclined with respect to a plan defining the opening of the window frame.

In even other embodiments, the louvered plates are attached to an outer surface of the window frame to extend inclinedly downward from the outside of each of the through-holes toward the inside.

### ADVANTAGEOUS EFFECTS

According to the wind-collecting tower for the wind power generator according to the present invention, the louvered window including the one or more louvered plates may be disposed on the guide passages for guiding the external air into the wind tunnel from the outside or the through-holes of the one or more support frame bodies mounted on the guide passages. Thus, when wind passing through the louvered window is introduced into the wind tunnel due to the grade of each of the guide passages and the inclination of each of the louvered plates of the louvered window, the wind has the downward flow ability already. In addition, since the wind introduced into the guide passages or the wind tunnel through the louvered window is not discharged to the outside through the other louvered window, the wind introduced once into the wind tunnel may be not discharged again to the outside, but be moved toward the lower end of the wind tunnel along the wind tunnel to stably flow up to the blow tube path.

Also, in the wind-collecting tower including the louvered window, since each of the louvered plates is always maintained at a constant angle, a constant ventilation angle may be secured regardless of a pressure of wind accumulated with the wind tunnel. Thus, even though the wind pressure is accumulated or increased at the lower end of the wind tunnel, the external air may be introduced. Therefore, the wind-collecting tower may secure stable and sufficient wind amount to maximize the efficiency of the wind power generator using the wind-collecting tower when compared to the typical wind-collecting tower in which an external air passage is closed due to the increase of a wind pressure at a lower portion of a wind tunnel.

### BRIEF DESCRIPTION OF THE DRAWINGS

FIG. 1 is a front view of an outer appearance of a typical wind power generator.

FIG 2 is a cross-sectional view of a wind-collecting tower of FIG. 1.

FIG. 3 is a longitudinal sectional view of the wind-collecting tower of FIG. 1.

FIG. 4 is a front view illustrating an outer appearance of a wind-collecting tower for a wind power generator according to an embodiment of the present invention.

FIG. 5 is a schematic longitudinal sectional view of the wind power generator including the wind-collecting tower of FIG. 4.

FIG. 6 is a front view of a louvered window of FIG. 5.

FIG. 7 is a longitudinal sectional view of FIG. 6.

<DESCRIPTION OF THE SYMBOLS IN MAIN PORTIONS OF THE DRAWINGS>

1: Wind-collecting tower 3: Base

5: Wind inlet port 7: Guide passage

10: Wind tunnel 13: Wind-collecting plate

15: Guide plate 19: Blow tube path

20: Guide part 21: Horizontal bar

22: Vertical bar 30: Louvered window

31: Window frame 33: Louvered plate

35: Opening 40: Inner barrel

41: Top plate 50: Outer barrel

60: Blowing unit 61: Rotation shaft

63: Wind rose 65: Impeller

70: Wind power generator 80: Turbine

### MODE FOR CARRYING OUT THE INVENTION

Hereinafter, a wind-collecting tower of a wind power generator according to an embodiment of the present invention will be described in detail with reference to the accompanying drawings.

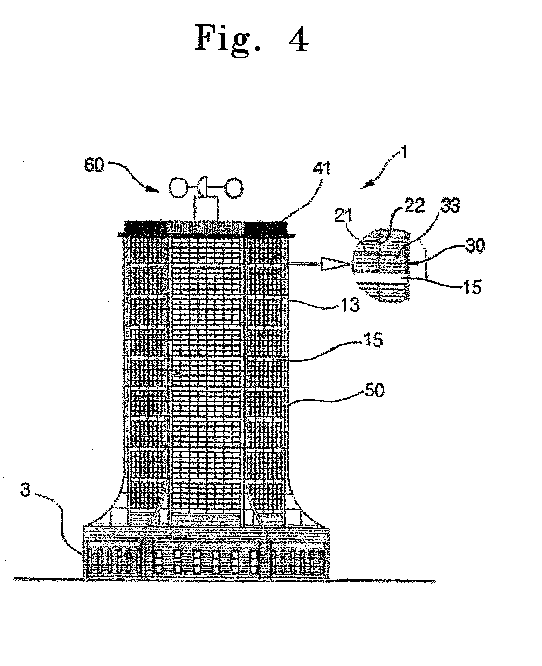

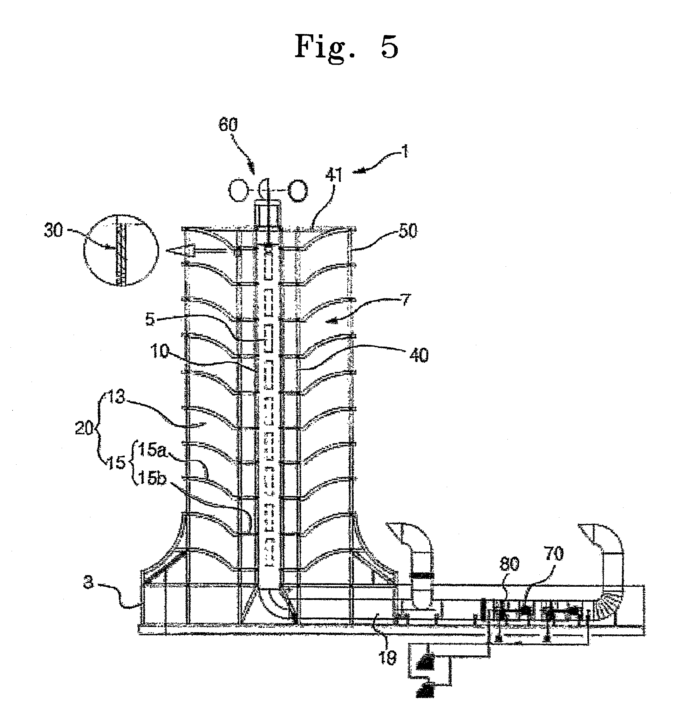

The wind-collecting tower of the present invention may be a large scale structure having a tower shape which is used for generating wind power. Referring to FIGS. 4 and 5, the wind-collecting tower 1 includes a wind tunnel 10, a guide part 20, and a plurality of louvered windows 30.

As shown in FIG. 5, the wind tunnel 10 may be a cylindrical structure which collects wind into a center of the wind-collecting tower 1 to provide the collected wind toward a turbine 80 of a wind power generator 70 disposed in a base 3. The wind tunnel 10 stands upright on the base 3 and has a plurality of wind inlet ports 5 through which wind is introduced through a circumferential surface thereof. The wind tunnel 10 stands upright on the base 3 and has various shapes in section. However, in this embodiment, the wind tunnel 10 has a hexagonal shape as shown in FIGS. 4 and 5. Also, the wind tunnel 10 has a lower outlet port connected to a blow tube path 19 defined in the base 3. A turbine 80 is installed at one place of the blow tube path 19. The turbine 80 is coaxially connected to the wind power generator 70 and rotated by wind supplied through the blow tube path 19 to operate the wind power generator 70, thereby generating electricity.

The guide part 20 is coaxially disposed with respect to the wind tunnel 10 to surround the periphery of the wind tunnel 10, thereby defining a plurality of guide passages 7. That is, the guide part 20 guides wind introduced from the outside up to the wind inlet ports 5 passing through the circumferential surface of the wind tunnel 10. The guide part 20 includes a plurality of wind-collecting plates 13 and a plurality of guide plates 15.

Here, the wind-collecting plates 13 may serve as a longitudinal frame of the wind-collecting tower 1. As shown in FIGS. 4 and 5, the wind-collecting plates 13 are arranged in a radial direction along the circumference of the wind tunnel 10. Also, the wind-collecting plates 13 are spaced from each other at an angle of about 60° to pass through six edges of the wind tunnel 10 having the hexagonal shape. That is, the wind-collecting plates 13 may be arranged in a diagonal direction of the hexagonal shape on the whole.

Also, the guide plates 15 vertically define a plurality of guide passages 7 along the wind inlet ports 5 so that the plurality of guide passages 7 are vertically stacked. Thus, the guide plates 15 are vertically stacked spaced from each other between the wind-collecting plates 13. Here, each of guide plates 15 includes a downwardly bent part 15a gradually inclined downward from the outside thereof toward the inside and a horizontal part 15b extending horizontally from the inside of the downwardly bent part 15a and connected to the circumference of the wind tunnel 10.

The plurality of guide plates 15 vertically disposed spaced from each other between the wind-collecting plates 13 disposed in a radial direction along the circumference of the wind tunnel 10 and the two wind-collecting plates 13 adjacent to each other define the guide passages 7 for guiding wind blowing from the outside up to the wind inlet ports 5 of the wind tunnel 10.

The plurality of louvered windows 30 guides wind introduced into the guide part 20 downward from the guide part 20 to introduce the wind into the wind inlet ports 5 of the wind tunnel 10. As shown in FIGS. 4 and 5, the plurality of louvered windows 30 are disposed spaced a predetermined distance from the wind tunnel 10 on at least one side of the guide passages 7 connected to the wind tunnel 10 to cross the guide passages 7. Alternatively, a louvered window 30 may be manufactured with a large size so that one louvered window 30 is mounted on one guide passage 7. However, as shown in FIG. 4, each of support frame bodies 40 and 50 may be disposed on one place of each of the guide passages 7 to cross the guide passage 7, and then the plurality of louvered windows 30, each having a relatively small size, may be disposed on the support frame bodies 40 and 50.

Thus, as shown in FIGS. 4, 6 and 7, each of the support frame bodies 40 and 50 may cover the entire transverse surface of each of the guide passages 7. Thus, if each of the support frame bodies 40 and 50 has through-holes 23 through which wind passes, it makes no difference to allow each of the support frame bodies 40 and 50 to have any shape. However, in this embodiment, each of the support frame bodies 40 and 50 may have a lattice shape including a horizontal bar 21 and a vertical bar 22. Here, the through-holes 23 may be defined by a plurality of lattice holes, each having a square shape, defined by the horizontal bar 21 and the vertical bar 22.

Also, as shown in FIGS. 4 and 5, at least one or more, i.e., a plurality of support frame bodies 40 and 50 may be provided along each of the guide passages 7. For example, two support frame bodies 40 and 50 may be disposed on the inside of the wind-collecting tower 1 adjacent to the wind tunnel 10 and the outermost portion of the wind-collecting tower 1, respectively. Thus, when the wind tunnel 10 has the hexagonal shape as shown in this embodiment, the support frame bodies 40 and 50 disposed between the wind-collecting plates 13 passing through the six edges of the wind tunnel 10 may also be coaxially arranged in a hexagonal shape on the whole.

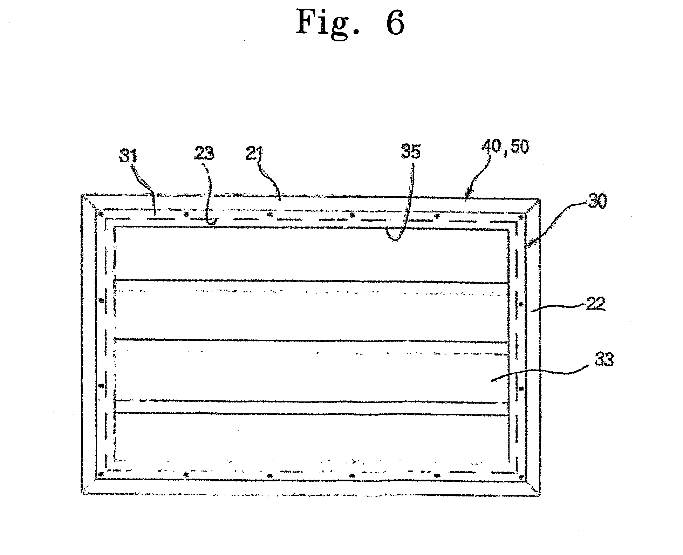

The louvered window 30 mounted on each of the support frame bodies 40 and 50 includes a window frame 31 mounted on circumferences of the through-holes 23 of the support frame bodies 40 and 50, i.e., on the horizontal bar 21 and vertical bar 22 in FIG. 6 and one or more louvered plates 33 mounted on an opening 35 of the window frame 31. Here, the window frame 31 serves as a frame body defining an outer circumference of the louvered window 30. Also, the window frame 31 is directly coupled to the circumferences of the through-holes 23. Each of the louvered plates 33 is attached to the window frame 31 to cover the opening 35 of the window frame 31. Also, the louvered plates 33 are arranged inclinedly at a predetermined angle with respect to a plan defining the opening 35 of the window frame 31. Thus, the louvered plates 33 guides wind so that the wind passing through the through-holes 23 does not easily flow toward the outside and is moved into the wind tunnel 10 along the guide passages 7 or moved downward along the wind tunnel 10.

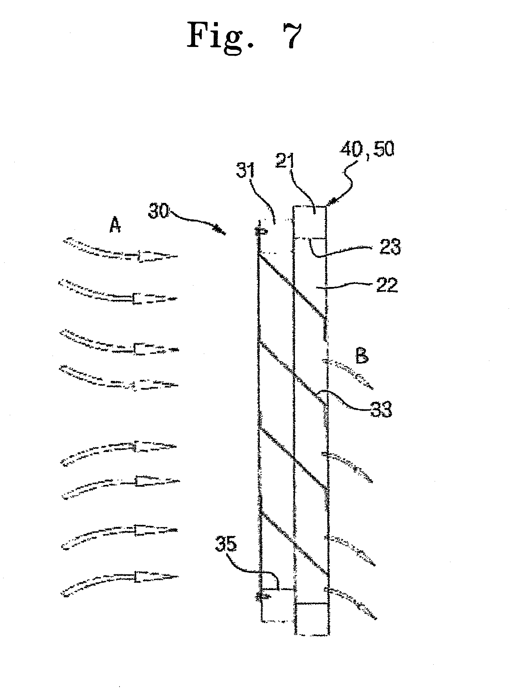

For this, each of the louvered plates 33 may have various sizes, and also the louvered plates 33 may be provided with various numbers or arrangements on the through-holes 23. Specifically, as shown in FIG 7, each of the louvered plates 33 may be attached to an outer surface of the window frame 31 to inclinedly extend downward from the outside of the through-holes 23 toward the inside.

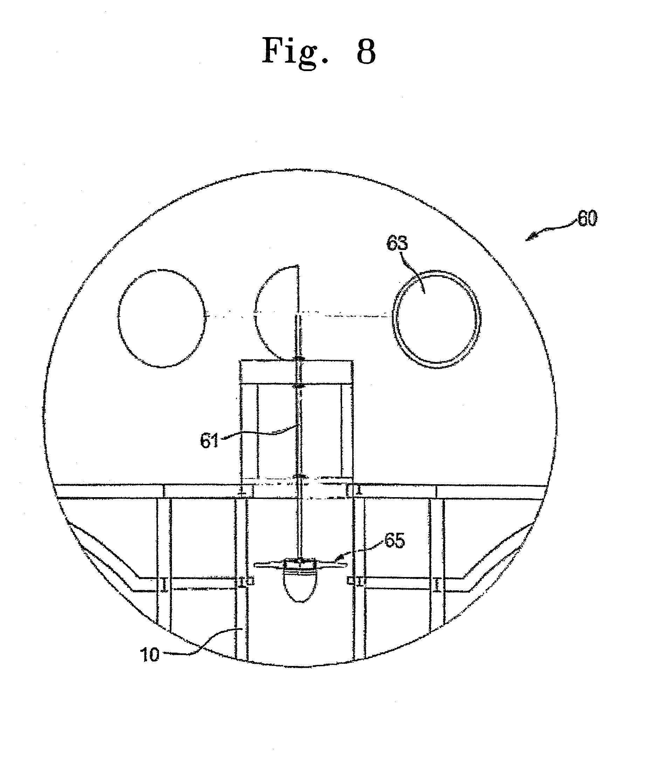

As shown in FIG 5, the wind-collecting tower 1 according to the present invention includes a blowing unit 60 passing through a top plate 41 disposed on an upper end of the wind tunnel 10 so that wind introduced into the wind tunnel 10 through the through-holes 23 and the louvered window 30 does not flow outward through the other wind inlet ports 5 or the through-holes 23 and has sure downward straightness. The blowing unit 60 may have various shapes. However, in this embodiment, the blowing unit 60 includes a rotation shaft 61, a plurality of wind roses 63, and an impeller 64 as shown in more detail in FIG 8.

Here, as shown in FIGS. 5 and 8, the rotation shaft 61 connects the inside and outside of the wind tunnel, i.e., the wind-collecting tower 1 to each other. The rotation shaft 61 is rotatably installed to pass through a center of the top plate 41 corresponding to the wind tunnel 10. The plurality of wind roses 63 catches wind blowing above the upper end of the wind-collecting tower 1. The plurality of wind roses 63 are disposed spaced at a predetermined distance from each other in a radial direction on an upper end of the rotation shaft 61, and thus are rotated by wind passing above the top plate 41 of the wind-collecting tower 1. The impeller 65 is rotated to generate downward air current from the upper end of the wind tunnel 10 toward a lower end. Thus, the impeller 65 is mounted on a lower end of the rotation shaft 61 and synchronously rotated with the wind roses 63.

Hereinafter, an effect of the wind-collecting tower 1 for the wind power generator according to a preferred embodiment of the present invention will be described.

As shown in FIGS. 4 and 5, according to the wind-collecting tower 1, wind blowing into the guide passages 7 or the wind tunnel 10 through the through-holes 23 is not discharged again into the guide passages 7 or the outside, but is stably moved into the wind tunnel 10 or up to the turbine 80 along the wind tunnel 10. External air approaching the louvered windows 30 as shown by the arrow A of FIG. 7 is introduced into the guide passages 7 through the through-holes 23 as shown by the arrow B.

Here, when the support frame body 50 is provided as a single layer on the outside of the guide passage 7, wind passing through the through-holes 23 is directly introduced into the wind tunnel 10. Also, as shown in FIG. 5, when the support frame bodies 40 and 50 are provided as two layers on the inside and outside of the guide passage 7, wind is introduced into the wind tunnel 10 through through-holes 23 of the outer support frame body 50 and the inner support frame body 40.

The wind introduced into the wind tunnel 10 flows downward due to a grade of the guide passage 7 and the louvered plates 33 of the louvered windows 30. The wind introduced once into the wind tunnel 10 is not discharged to the outside through the wind inlet ports 5 or the inner through-holes 23, but flows downward along the wind tunnel 10. Thus, the wind may be stably moved up to the blow tube path 19.

Furthermore, since the blowing unit 60 is mounted on the upper end of the wind tunnel 10, downward air current flowing from the upper end of the wind tunnel 10 toward the lower end may occur. Also, when wind blows above the wind-collecting tower 1, the plurality of wind roses catching the wind are rotated with respect to the rotation shaft 61. Thus, the impeller 65 coupled to the lower end of the rotation shaft 61 is synchronously rotated to generate wind flowing in a downward direction of the wind tunnel 10. The generated wind flowing in the downward direction of the wind tunnel 10 entrains external air blowing toward a sidewall of the wind tunnel 10 through the wind inlet ports 5 downward while flowing up to the lower end of the wind tunnel 10 along the wind tunnel 10. Thus, the downward straightness of the external air may be enhanced.

Thus, the wind introduced into the wind tunnel 10 with the downward flow ability while passing through the plurality of louvered windows 30 disposed on the guide part 20 may be further enhanced in downward flow ability by wind blowing from the blowing unit 60. Accordingly, the wind is not discharged to the outside through other through-holes 9, but flows downward along the wind tunnel 10. Therefore, the wind may be stably moved up to the blow tube path 19 to more strongly rotate the turbine 80, thereby generating a relatively large amount of electricity from the wind power generator 70.

## Claims

1. A wind-collecting tower for a wind power generator, the wind-collecting tower comprising:
a cylindrical wind tunnel (10) which stands upright on a base (3), the cylindrical wind tunnel (10) having a circumferential surface in which a plurality of wind inlet ports for introducing wind are defined;
a guide part (20) disposed on a circumference of the wind tunnel (10), the guide part (20) having a plurality of guide passages (7) for guiding wind introduced from the outside into the wind inlet ports (5);
a plurality of louvered windows (30) disposed spaced from the wind tunnel (10) on the guide passages (7) of the guide part (20) to guide the wind introduced into the guide part (20) downward from the guide part (20), thereby introducing the wind into the wind inlet ports (5) of the wind tunnel (10); and
at least one or more support frame bodies (40, 50) arranged transversely on each of the guide passages (7), the support fame bodies (40, 50) having one or more through-holes (23) covered by the louvered windows (30),
wherein the guide part (20) comprises:
a plurality of wind-collecting plates (13) arranged in a redial direction along the circumference of the wind tunnel (10); and
a plurality of guide plates (15) vertically spaced from each other between the wind-collecting plates (13) and arranged on the circumference of the wind tunnel (10) so that the guide plates (15) together with the wind-collecting plates (13) defines the guide passages (7).

2. The wind-collecting tower of claim 1, further comprising a blowing unit (60) comprising: a rotation shaft (61) rotatably disposed to pass through a center of a top plate (41) corresponding to the wind tunnel (10); a plurality of wind roses (63) disposed on an upper portion of the rotation shaft (61) and rotated by wind passing above the top plate (41) to rotate the rotation shaft (61); and an impeller (65) disposed on a lower portion of the rotation shaft (61) and synchronously rotated with the wind roses (63) to generate an air current flowing from an upper end of the wind tunnel (10) to a lower end.

3. The wind-collecting tower of claim 1 or 2, further comprising at least one or more support frame bodies (40, 50) arranged transversely on each of the guide passages (7), the support fame bodies (40, 50) having one or more through-holes (23) covered by the louvered windows (30).

4. The wind-collecting tower of claim 3, wherein the louvered windows (30) comprises:
a window frame (31) defining an outer circumference thereof and coupled to the through-holes (23); and
at least one or more louvered plates (33) attached to the window frame (31) to cover an opening (35) of the window frame (31), the louvered plates (33) being arranged inclined with respect to a plan defining the opening (35) of the window frame (31).

5. The wind-collecting tower of claim 4, wherein the louvered plates (33) are attached to an outer surface of the window frame (31) to extend inclinedly downward from the outside of each of the through-holes (23) toward the inside.
